(19) Europäisches Patentamt
European Patent Office
Office européen des brevets

(11) Veröffentlichungsnummer: **0 411 432 B1**

(12) **EUROPÄISCHE PATENTSCHRIFT**

(45) Veröffentlichungstag der Patentschrift: **06.09.95**

(51) Int. Cl.$^6$: **C08G 18/18**, C08G 18/66, C08G 18/76, C09J 175/04, C08G 18/65

(21) Anmeldenummer: **90114114.3**

(22) Anmeldetag: **24.07.90**

# (54) Zweikomponenten-Polyurethanklebstoff.

(30) Priorität: **04.08.89 DE 3925790**

(43) Veröffentlichungstag der Anmeldung:
**06.02.91 Patentblatt 91/06**

(45) Bekanntmachung des Hinweises auf die Patenterteilung:
**06.09.95 Patentblatt 95/36**

(84) Benannte Vertragsstaaten:
**AT BE CH DE ES FR GB IT LI NL SE**

(56) Entgegenhaltungen:
**EP-A- 0 012 352**
**EP-A- 0 063 534**
**DE-A- 2 732 292**
**US-A- 3 714 127**
**US-A- 4 743 672**

(73) Patentinhaber: **BAYER AG**

**D-51368 Leverkusen (DE)**

(72) Erfinder: **Jansen, Bernhard, Dr.**
**Roggendorfstrasse 65**
**D-5000 Köln 80 (DE)**
Erfinder: **Müller, Hanns-Peter, Dr.**
**Weizenfeld 36**
**D-5060 Bergisch-Gladbach 2 (DE)**
Erfinder: **Stepanski, Horst, Dr.**
**Raushofstrasse 20**
**D-5090 Leverkusen 3 (DE)**
Erfinder: **Colinas-Martinez, José**
**Am Stumpf 19**
**D-5632 Wermelskirchen 2 (DE)**

**EP 0 411 432 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Zweikomponenten-Polyurethanklebstoffe sowie ein Verfahren zum Verkleben von Werkstoffen unter Verwendung der erfindungsgemäßen Klebstoffe.

Zweikomponenten-Polyurethanklebstoffe sind seit langem bekannt. So werden in den US-A-3 274 160 die Reaktionsprodukte von Polyisocyanaten mit einem Gemisch beschrieben, welches alkoholische Hydroxylfunktionen besitzt. Die US-A-3 591 561 und 3 725 355 beschreiben die Herstellung von Polyurethanelastomeren. Im ersten Fall werden ein Lactonpolyesterpolyol und ein niedermolekulares Diol mit einem organischen Diisocyanat umgesetzt und mittels Diamin oder Polyol wie z.B. Glycerin vernetzt. Im zweiten Fall wird das Polyurethanelastomer aus einem Polyetherpolyol, einem Kettenverlängerer und einem Isocyanatprepolymeren unter Verwendung eines Zinnkatalysators gewonnen. US-A-3 577 295 beschreibt Polyurethanelastomere für Treibriemen unter Verwendung von Polyolgemischen, welche Polymerisate ungesättigter Monomerer enthalten, organischen Polyisocyanaten und Aminen als Härtungsmittel. In US-A-4 182 898 sind Polyurethane beschrieben aus Polyesterpolyol-Prepolymeren, die im Gemisch mit niedermolekularen Polyolen mit Diisocyanaten umgesetzt werden. US-A-4 193 832 beschreibt die Reaktion von Polyisocyanaten mit isocyanatreaktivem Wasserstoff, bei der tertiäre Amine als Katalysatoren fungieren können. Ein Herstellungsverfahren für Polyurethanklebstoffe unter Verwendung überschüssigen Diisocyanates, Polyolen und gegebenenfalls Kettenverlängerern wie z.B. Aminen wird in US-A-4 156 064 beschrieben. Speziell die Verwendung von Aminen zur Bewirkung des "non-sagging"-Charakters von Klebstoffen wird beschrieben in US-A-3 979 364, 4 336 298 und 4 444 976 sowie EP-A-63 534.

US-A-4.487.909 beschreibt einen Klebstoff auf der Basis eines Polyols, z.B. eines Polyetherpolyols und Glycerin als Verzweiger. In US-A-4 530 941 wird eine Rim-Polyurethanmischung beschrieben, die sich zusammensetzt aus einem hochmolekularen Polyol, einem Kettenverlängerer, einem mit Aminendgruppen versehenen Polyoxyalkylen und einem Polyisocyanat. US-A-4 554 340 beschreibt die Polyolmischung zur Herstellung von Polyurethanen aus hochmolekularem Polyalkylenoxid und niedermolekularem Diol, gegebenenfalls auch isocyanatreaktiven Verbindungen wie Glycerin und Diamin. US-A-4 568 717 beschreibt die Herstellung von Polyolen aus organischen Polyisocyanaten mit einem Terephthalsäurepolyesterpolyol. US-A-3 714 127 beschreibt Zweikomponenten-Polyurethanklebstoffe auf Basis eines Isocyanatprepolymeren, dem zum Zwecke der Viskositätserhöhung und zur Gewährleistung von non-sagging Verhalten ein Amin zugesetzt wird.

EP-A-0 068 209 beschreibt einen Zweikomponenten-Polyurethanklebstoff mit einer Polyolkomponente, welche ein Polyester- oder Polyethertriol, ein Phenylendiamin und einen Zinnkatalysator enthält. Diese Mischung wird mit einem aromatischen Diisocyanat zur Reaktion gebracht.

EP-A-248 254 beschreibt einen Zweikomponenten-Polyurethanklebstoff, der das Reaktionsprodukt ist aus einem hydroxylfunktionellen Material, einem Di- oder Triamin und einem organischen Isocyanat. Die so hergestellten Klebstoffe zeichnen sich durch hervorragende Eigenschaften aus, jedoch befriedigen sie noch nicht alle Ansprüche bei Hochfrequenz- oder Mikrowellenhärtung. Derartige Härtungsverfahren sind insbesondere für die Herstellung von Karosserie-Einzelteilen üblich.

US-A-4,743,672 beschreibt einen Zweikomponenten-Polyurethanklebstoff, enthaltend ein Polyisocyanat-Prepolymer, eine isocyanatreaktive Komponente sowie einen Katalysator für die Umsetzung der isocyanatreaktiven Komponente mit dem Polyisocyanat-Prepolymer. Als Katalysator für die Umsetzung dient z.B. Triethylendiamin.

Der Erfindung lag deshalb die Aufgabe zugrunde, ein Zweikomponenten-Klebstoffsystem bereitzustellen, welches ein verbessertes Härtungsverhalten bei Hochfrequenz- oder Mikrowellenhärtung aufweist. Gleichzeitig sollte das System aber auch zur Härtung bei Raumtemperatur geeignet sein.

Gegenstand der Erfindung ist ein Zweikomponenten-Polyurethanklebstoff, enthaltend eine Isocyanatkomponente a), eine isocyanatreaktive Komponente b) sowie einen Katalysator für die Umsetzung von a) und b), dadurch gekennzeichnet, daß als Katalysator eine Verbindung der Formel

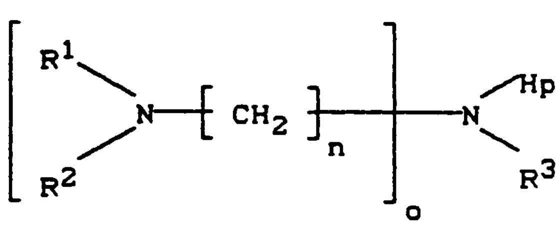

enthalten ist, worin bedeuten

| | |
|---|---|
| $R^1$, $R^2$ | gleich oder verschieden, Alkyl mit 1 - 4 C-Atomen, insbesondere Methyl und Ethyl |
| $R^3$ | ein CHO-Rest, oder H, oder Alkyl mit 1 - 4 C-Atomen, gegebenenfalls substituiert mit einem CHO-Rest |
| n | ganze Zahl von 2 - 4, |
| o | 1 oder 2, |
| p | 0 oder 1, |

$$o + p = 2.$$

In einer bevorzugten Ausführungsform sind in der Komponente b) enthalten

b1) 100 Gew.-Teile wenigstens einer hydroxylgruppenhaltigen Verbindung mit einem Molekulargewicht von mindestens 400 und einer Hydroxylfunktionalität von mindestens 2

b2) 2-20 Gew.-Teile wenigstens eines aliphatischen, aromatischen oder cycloaliphatischen Diamins oder Triamins mit einem Molekulargewicht von mindestens 60 sowie gegebenenfalls

b3) 5-40 Gew.-Teile wenigstens eines hydroxylgruppenhaltigen, niedermolekularen Kettenverlängerers mit einem Molekulargewicht von mindestens 62 und einer Funktionalität von mindestens 2.

In einer bevorzugten Ausführungsform sind in den Teilkomponenten a) und b) weiter übliche Hilfs- und Zusatzstoffe enthalten. In einer besonders bevorzugten Ausführungsform ist der Katalysator in der Komponente b) enthalten. Der Katalysator wird vorzugsweise in einer solchen Menge eingesetzt, daß pro 100 g in der Komponente b) mindestens 0,005 g tertiärer Aminstickstoff enthalten ist unter Berücksichtigung des gegebenenfalls als Komponente b1) enthaltenen tertiären Stickstoffs.

Als Isocyanatkomponenten kommen vor allen Dingen Verbindungen der folgenden Formel in Frage:

$Q\ (NCO)_n$,

in der

n = 2-4, vorzugsweise 2, und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen bedeuten.

Besonders bevorzugte Polyisocyanate sind Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3-und/oder -1,4-phenylendiisocyanat, Perhydro-2,4′-und/oder -4,4′-diphenylmethan-diisocyanat, 1,3- und 1,4-Phenylendiisocyanat,2,4- und 2,6-Toluylendiisocyanat sowie beliebige Gemische dieser Isomeren, Diphenylmethan-2,4′- und/oder -4,4′-diisocyanat, Naphthylen-1,5-diisocyanat, Triphenylmethan-4,4′,4″-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200 wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen

Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von ca. 1,5:1 bis 20:1, vorzugsweise 5:1 bis 15:1 zur Umsetzung gebracht. Die NCO-Prepolymeren weisen im allgemeinen einen NCO-Gehalt von 2,5 bis 25, vorzugsweise 6 bis 22, Gew.-% auf. Hieraus geht bereits hervor, daß im Rahmen der vorliegen Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für das erfindungsgemäße Verfahren besonders bevorzugte Polyisocyanatkomponenten a1) sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanatodicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder( Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Zu den gegebenenfalls mitzuverwendenden Hilfs- und Zusatzstoffen zählen beispielsweise Füllstoffe, Farbstoffe und Pigmente.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibole, Chrisotil, Talkum; Metalloxide wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Materialien wie Asbest, Wollastonit und insbesondere Glasfasern verschiedener Länge, die gegebenenfalls geschlichtet sein können.

Füllstoffe können einzeln oder als Gemisch verwendet werden.

Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten a) und b), zugegeben.

Nähere Angaben über die üblichen Hilfs- und Zusatzstoffe sind der Fachliteratur, beispielsweise der Monographie von J.H. Saunders und K.C. Frisch "High Polymers" Band XVI, Polyurethanes, Teil 2 und 7, Verlag Interscience Publishers 1962 bzw. 1964, zu entnehmen.

Bei der Komponente b1) des erfindungsgemäßen Systems handelt es sich vorzugsweise um mindestens eine organische Verbindung mit einem Molekulargewicht von 400 - 12.000, vorzugsweise 400 - 6.000, mit 2 - 8, vorzugsweise 2 - 5, Hydroxylfunktionen. Die hier angegebenen Molekulargewichte sind aus der OH-Zahl der Substanz über folgende Beziehung zu errechnen:

$$\text{Molekulargewicht} = \frac{56.000}{\text{OH-Zahl}} \times \text{Funktionalität}$$

Es können beispielsweise Polyhydroxypolyether der aus der Polyurethanchemie an sich bekannten Art verwendet werden, wie sie durch Alkoxylierung geeigneter Startermoleküle wie Ethylenglykol, Diethylenglykol, 1,4-Dihydroxybutan, 1,6-Dihydroxyhexan, Trimethylolpropan, Glycerin, Pentaerythrit, Sorbit oder Saccharose zugänglich sind. Als Starter können ebenfalls fungieren: Ammoniak oder Amine wie Ethylendiamin, Hexamethylendiamin, 2,4-Diaminotoluol, Anilin oder Aminoalkohole. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure,

Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796, 2 550 797, 2 550 833, 2 550 862, 2 633 293 und 2 639 254 beschrieben. Es ist aber auch möglich gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit.

Vertreter der genannten erfindungsgemäß als Verbindungen b1) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Bevorzugte Amine b2) haben ein Molekulargewicht von 60 - 300. Besonders bevorzugt sind dabei Diamine wie 1,4-Diaminobenzol, 2,4-Diaminotoluol, 2,4′-und/oder 4,4′-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3′,5′-Tetraethyl-4,4′-diaminodiphenylmethan, 3,5,3′,5′-Tetraisopropyl-4,4′-diaminodiphenylmethan oder 3,5-Diethyl-3′,5′-diisopropyl4,4′-diaminodiphenylmethan. Beliebige Gemische derartiger aromatischer Diamine können ebenfalls eingesetzt werden.

Besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Bevorzugte Polyole b3) sind niedermolekulare mehrwertige Alkohole mit einem Molekulargewichtsbereich von 62 - 400, wie die bereits als Startermoleküle unter b1) erwähnten Substanzen wie Ethylenglykol, Diethylenglykol, 1,4-Dihydroxybutan, 1,6-Dihydroxyhexan, Trimethylolpropan, Glycerin, Pentaerythrit, Sorbit oder Saccharose. Besonders bevorzugt sind mehrwertige Alkohole mit einer Funktionalität von 2.

Bevorzugte erfindungsgemäße Katalysatoren sind im folgenden angegeben:

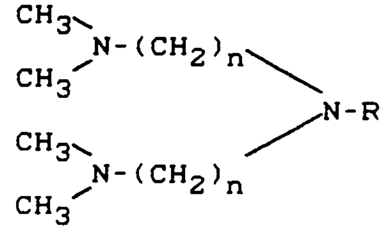

mit n = 2,3 und R = H, CHO oder $CH_3$

Besonders bevorzugte Katalysatoren sind:

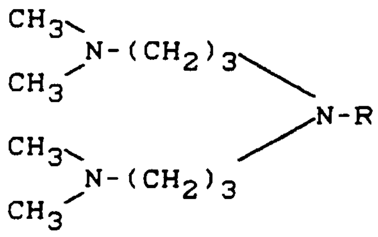 und 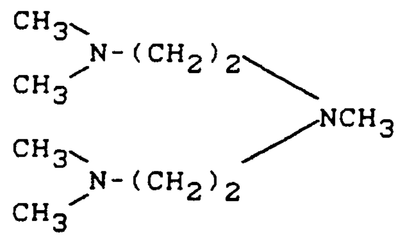

mit R = CHO oder H.

Die genannten Katalysatoren besitzen den Vorteil, den Polyolgemischen, denen sie beigemischt werden, bessere Lagerstabilität zu verleihen. Das heißt, es unterbleiben größtenteils Effekte wie Phasenseparationen und Abscheidungen flüssiger Bestandteile.

Gegenstand der vorliegenden Erfindung ist auch ein Verfahren zum Verkleben von Substanzen mit dem erfindungsgemäßen System. Das erfindungsgemäße System eignet sich insbesondere zum Verkleben von Kunststoffen, Metallen, Holz und Glas.

Die Anwendung des Zweikomponenten-Polyurethanklebstoffes erfolgt vorzugsweise durch kontinuierliches Mischen der beiden Komponenten a) und b) entweder in einem Rührermischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich. Die Mengenverhältnisse von Isocyanat- zu Polyolkomponenten folgen den allgemein in der Isocyanatchemie geltenden Prinzipien; es wird mit geringfügigem Isocyanatüberschuß gearbeitet (Kennzahlbereich: 100 - 125, bevorzugt: 100 - 115).

Die mit Klebstoff versehenen Substrate werden zusammengelegt, fixiert und entweder bei Raumtemperatur aushärten gelassen bzw. einem Härtungsprozeß bei erhöhter Temperatur unterworfen. Bei erhöhter Temperatur kann der Zustand der Handfestigkeit schneller erreicht werden als bei Raumtemperatur.

Die gewünschte offene Zeit bzw. Aushärtezeit kann durch die Wahl der Aushärtetemperatur und Wahl des erfindungsgemäßen Katalysators in weiten Grenzen variiert werden.

Ein weiterer Vorteil des erfindungsgemäßen Klebstoffs besteht darin, daß er lösungsmittelfrei verarbeitet werden kann.

## Beispiele

Im folgenden verwendete Abkürzungen:

Roh-MDJ:

4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt: 30,4 %, Viskosität $\pi_{25^\circ C}$:80 mPa.s.

Polyether 1:

In Analogie zu Beispiel 1 der DE-A-2 638 759 wird ein Füllstoffpolyether hergestellt, wobei als "Lösungsmittel" 5070 Gew.-Teile eines Polyetherpolyols der OH-Zahl 35, hergestellt durch Propoxylierung von Trimethylolpropan und Ethoxylierung des Propoxylierungsprodukts (PO:EO-Verhältnis = 83:17), an Stelle der 670 Gew.-Teile Hydrazinhydrat lediglich 380 Gew.-Teile Hydrazinhydrat und an Stelle der 2310 Gew.Teile Toluylendiisocyanat lediglich 1320 Gew.-Teile des Diisocyanates eingesetzt werden.

Es resultiert ein Polyether mit einem Gehalt an organischen Füllstoff von 20 Gew.-% und einer Hydroxylzahl von 28 mg KOH/g.

$H_{12}$-MDA

Aliphatisches Diamin der Struktur:

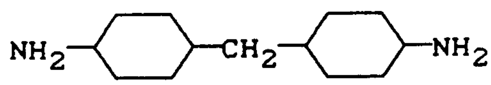

Katalysator 1:

tert. Aminkatalysator der Struktur

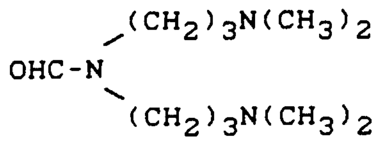

Katalysator 2:

tert. Aminkatalysator

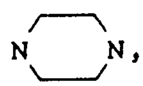

1,4-Diazabicyclo-2,2,2-octan

Zeolith-Paste:

eine 50 %ige Zeolith-Suspension in Rizinusöl

Beispiel 1 (Vergleichsbeispiel, unkatalysiert)

500 Gew.-Teile Polyether 1 werden vermischt mit 75 Gew.-Teilen Butandiol-1,4, 25 Gew.-Teilen $H_{12}$-MDA und Gew.-Teilen Zeolith-Paste.

Beispiel 2 (erfindunsggemäß katalysiertes Beispiel)

500 Gew.-Teile Polyether 1 werden vermischt mit 75 Gew.-Teilen Butandiol-1,4, 25 Gew.-Teilen $H_{12}$-MDA und 25 Gew.-Teilen Zeolith-Paste. Zur fertigen Mischung werden noch 1,9 Gew.-Teile Katalysator 1 zugegeben und homogen untergerührt.

Beispiel 3 (Vergleichsbeispiel, katalysiert mit Katalysator 2 gemäß EP-A 0 248 254, S. 12, Zeile 17).

500 Gew.-Teile Polyether 1 werden mit einer Lösung von 0,5 Gew.-Teilen Katalysator 2 in 75 Gew.-Teilen Butandiol-1,4, 25 Gew.-Teilen $H_{12}$-MDA und 25 Gewichtsteilen Zeolith-Paste vermischt.

Beispiel 4 (Mischtabelle für die Vermischung der Polyolkomponenten aus den Beispielen 1 bis 3 mit Roh-MDI).

| Polyolgemisch Beispiel | OH-Zahl | Mengenverhältnis Roh-MDJ:Polyolgemisch | Kenn-zahl | Mischung |
|---|---|---|---|---|
| 1 | 197,1 | 0,531 : 1 | | A |
| 2 | 196,5 | 0,529 : 1 | 100 | B |
| 3 | 197,0 | 0,531 : 1 | | C |

Beispiel 5 (Prüfung der klebtechnischen Eigenschaften der Mischungen A, B und C aus Beispiel 4)

Für die Prüfung der Zugscherfestigkeiten nach DIN 53 283 wurden einschnittig überlappte Verbindungen aus dem zu verklebenden Kunststoffmaterial hergestellt. Die Klebfugendicke betrug 0,8 mm, die Probenbreite 20 mm, die Überlappungslänge 10 mm. Die Abbindung erfolgte bei Raumtemperatur oder durch Mikrowellen bzw. Hochfrequenz-bestrahlung.

a) Fügeteile: Xenoy (ein Polycarbonat-Polybutylenterephthalat-Blend der Fa. General-Electric)

Abbinde- und Prüfbedingungen: bei Raumtemperatur

| Mischung | A | B* | C |
|---|---|---|---|
| Zugscherfestigkeitsmittelwerte ** [N/mm²] | 3,6 | 6,2 | 4,3 |

* erfindungsgemäße Mischung
** Mittelwert von 5 Klebeverbunden

b) Fügeteile: ein Polycarbonat-ABS-Blend mit 65 % Polycarbonat-Anteil

Abbinde- und Prüfbedingungen: bei Raumtemperatur

| Mischung | A | B* | C |
|---|---|---|---|
| Zugscherfestigkeitsmittelwerte ** [N/mm²] | 4,2 | 7,0 | 6,0 |

* erfindungsgemäße Mischung
** Mittelwert von 5 Klebeverbunden

c) Fügeteile: ein Polycarbonat-ABS-Blend mit 70 % Polycarbonatantei

Abbindebedingungen: im Mikrowellenofen bei einer Leistung von 800 W.
Prüfbedingungen: bei Raumtemperatur

| Mischung | A | B* | C |
|---|---|---|---|
| Zugscherfestigkeitsmittelwerte ** [N/mm²)<br>Zeit bis zur Handfestigkeit [sec]*** | 7,4<br>135 | 10,3<br>40 | 9,4<br>60 |

* erfindungsgemäße Mischung
** Mittelwert von 5 Klebeverbunden
*** Zeit bis das Teil zur Weiterverarbeitung handhabbar ist.

d) Fügeteile: Glasfaserverstärktes Polyesterharz

Abbindebedingungen: im Hochfrequenzofen bei 27,12 MHz
Prüfbedingungen: bei Raumtemperatur

| Mischung | A | B* | C |
|---|---|---|---|
| Zugscherfestigkeitsmittelwerte** [N/mm²] | 6,6 | 8,7 | 7,5 |
| Maximale HF-Leistung $p_{max}$ [W] | 150*** | 600 | 250 |
| mögliche Taktzeit bei $p_{max}$ [sec] | 120 | 15 | 55 |
| HF-Leistung für 40 sec Taktzeit [W] | nicht ereichbar | 200 W | nicht erreichbar |

* erfindungsgemäße Mischung
** Mittelwerte von 5 Klebeverbunden
*** bei höherer Leistung droht thermischer Abbau des Klebstoffes.

**Patentansprüche**

**1.** Zweikomponenten-Polyurethanklebstoff, enthaltend eine Isocyanatkomponente a), eine isocyanatreaktive Komponente b) sowie einen Katalysator für die Umsetzung von a) und b), dadurch gekennzeichnet, daß als Katalysator eine Verbindung der Formel

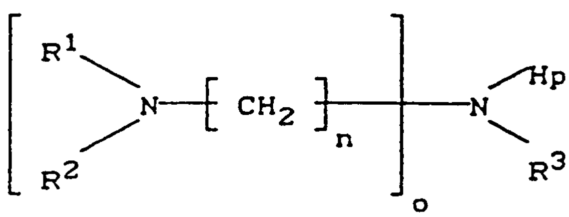

enthalten ist, worin bedeuten

| | |
|---|---|
| $R^1$, $R^2$ | gleich oder verschieden, Alkyl mit 1 - 4 C-Atomen, |
| $R^3$ | ein CHO-Rest, oder H, oder Alkyl mit 1 - 4 C-Atomen, |
| n | ganze Zahl von 2 - 4 |
| o | 1 oder 2 |
| p | 0 oder 1 |

$$o + p = 2.$$

**2.** Klebstoff nach Anspruch 1, dadurch gekennzeichnet, daß die Komponente b) enthält
b1) 100 Gew.-Teile wenigstens einer hydroxylgruppenhaltigen Verbindung mit einem Molekulargewicht von mindestens 400 und einer Funktionalität von mindestens 2
b2) 2-20 Gew.-Teile wenigstens eines aliphatischen, aromatischen oder cycloaliphatischen Diamins oder Triamins mit einem Molekulargewicht von mindestens 60.

3. Klebstoff nach Anspruch 2, dadurch gekennzeichnet, daß als Komponente b enthalten sind
   b1) ein Polyol, erhältlich durch Alkoxylierung von Trimethylolpropan
   b2) ein Cyclohexanderivat
   b3) ein Butandiol

4. Klebstoff nach Anspruch 1, dadurch gekennzeichnet, daß als Isocyanatkomponente a) ein Polyisocyanat der Diphenylmethanreihe oder ein Derivat davon enthalten ist.

5. Klebstoff nach Anspruch 1, dadurch gekennzeichnet, daß als Katalysator eine Verbindung der Formel

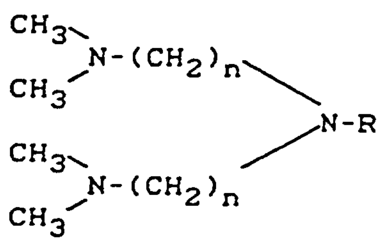

mit n = 2,3 und R = H, CHO oder $CH_3$
enthalten ist.

6. Klebstoffsystem nach Anspruch 1, dadurch gekennzeichnet, daß ein Überschuß der Isocyanatgruppen gegenüber den isocyanatreaktiven Gruppen vorliegt.

7. Klebstoff nach Anspruch 1, dadurch gekennzeichnet, daß der Katalysator in einer Menge enthalten ist, daß pro 100 g der Komponente b) mindestens 0,005 g tertiärer Aminstickstoff enthalten ist.

8. Verfahren zum Verkleben von Substanzen mit einem Zweikomponenten-Polyurethankleber, dadurch gekennzeichnet, daß ein Klebstoff gemäß Anspruch 1 verwendet wird.

9. Verfahren nach Anspruch 8, dadurch gekennzeichnet, daß der Klebstoff unter Verwendung von Hochfrequenz, Mikrowelle oder bei Raumtemperatur ausgehärtet wird.

## Claims

1. A two-component polyurethane adhesive containing an isocyanate component a), an isocyanate-reactive component b) and a catalyst for the reaction of a) and b), characterized in that the catalyst used is a compound corresponding to the following formula

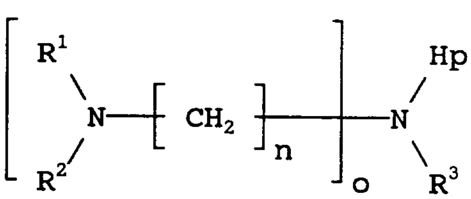

in which

| | |
|---|---|
| $R^1$ and $R^2$ | may be the same or different and represent $C_{1-4}$ alkyl, |
| $R^3$ | is a CHO group or H or $C_{1-4}$ alkyl, |
| n | is an integer of 2 to 4, |
| o | is 1 or 2, |
| p | is 0 or 1, |

$$o + p = 2.$$

2. An adhesive as claimed in claim 1, characterized in that component b) contains
   b1) 100 parts by weight of at least one hydroxyl-containing compound having a molecular weight of at least 400 and a hydroxyl functionality of at least 2
   b2) 2 to 20 parts by weight of at least one aliphatic, aromatic or cycloaliphatic diamine or triamine having a molecular weight of at least 60.

3. An adhesive as claimed in claim 2, characterized in that component b contains
   b1) a polyol obtainable by alkoxylation of trimethylol propane
   b2) a cyclohexane derivative
   b3) a butanediol.

4. An adhesive as claimed in claim 1, characterized in that a polyisocyanate of the diphenyl methane series or a derivative thereof is present as isocyanate component a).

5. An adhesive as claimed in claim 1, characterized in that a compound corresponding to the following formula:

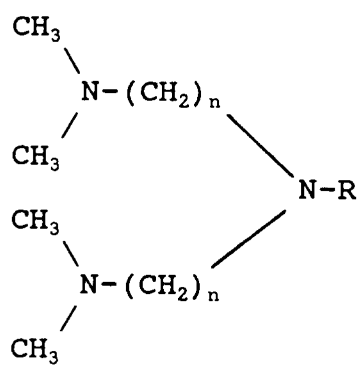

in which n = 2,3 and R = H, CHO or $CH_3$ is present as catalyst.

6. An adhesive system as claimed in claim 1, characterized in that the isocyanate groups are present in an excess over the isocyanate-reactive groups.

7. An adhesive as claimed in claim 1, characterized in that the catalyst is present in such a quantity that at least 0.005 g of tertiary amine nitrogen is present per 100 g of component b).

8. A process for bonding substrates using a two-component polyurethane adhesive, characterized in that the adhesive claimed in claim 1 is used.

9. A process as claimed in claim 8, characterized in that the adhesive is cured by high frequency or microwaves or at room temperature.

**Revendications**

1. Colle de polyuréthanne à deux composants contenant un composant isocyanate a), un composant réactif avec les isocyanates b) et un catalyseur de la réaction entre a) et b), caractérisée en ce qu'elle contient en tant que catalyseur un composé de formule :

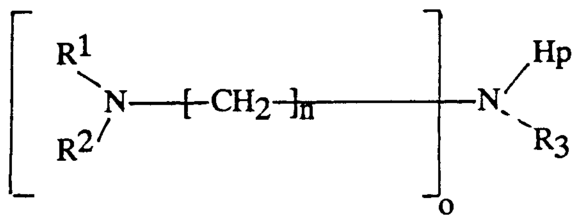

dans laquelle
$R^1$, $R^2$, ayant des significations identiques ou différentes, représentent chacun un groupe alkyle en $C_1$ à $C_4$,
$R^3$ représente un groupe CHO ou un atome d'hydrogène ou un groupe alkyle en $C_1$ à $C_4$,
n est un nombre entier allant de 2 à 4,
o est égal à 1 ou 2,
p est égal à 0 ou 1 et

$$o + p = 2.$$

**2.** Colle selon la revendication 1, caractérisée en ce que le composant b) contient
b1) 100 parties en poids d'au moins un composé contenant des groupes hydroxy, de poids moléculaire au moins 400 et ayant une fonctionnalité d'au moins 2,
b2) 2 à 20 parties en poids d'au moins une diamine ou triamine aliphatique, aromatique ou cycloaliphatique, de poids moléculaire au moins 60.

**3.** Colle selon la revendication 2, caractérisée en ce qu'elle contient en tant que composant b) :
b1) un polyol obtenu par alcoxylation du triméthylolpropane,
b2) un dérivé du cyclohexane,
b3) un butanediol.

**4.** Colle selon la revendication 1, caractérisée en ce qu'elle contient en tant que composant isocyanate a) un polyisocyanate de la série du diphénylméthane ou un dérivé d'un tel polyisocyanate.

**5.** Colle selon la revendication 1, caractérisée en ce que le catalyseur consiste en un composé de formule :

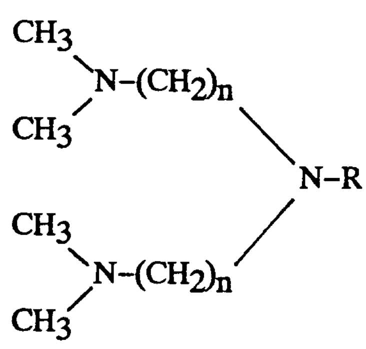

dans laquelle n = 2 ou 3 et R = H, CHO ou $CH_3$.

**6.** Colle selon la revendication 1, caractérisée en ce qu'elle contient un excès des groupes isocyanates par rapport aux groupes réactifs avec les isocyanates.

**7.** Colle selon la revendication 1, caractérisée en ce qu'elle contient le catalyseur en quantité correspondant à au moins 0,005 g d'azote d'amine tertiaire pour 100 g du composant b).

**8.** Procédé pour coller des matières à l'aide d'une colle de polyuréthanne à deux composants, caractérisé en ce que l'on utilise une colle selon la revendication 1.

**9.** Procédé selon la revendication 8, caractérisé en ce que l'on durcit la colle sous l'action de hautes fréquences, de micro-ondes ou à température ambiante.